# EUROPEAN PATENT SPECIFICATION

(11) **EP 1 323 577 B1**
(45) Date of publication and mention of the grant of the patent: **07.10.2009**
(21) Application number: 02028271.1
(22) Date of filing: 16.12.2002
(51) Int. Cl.: B60N 3/04, B29D 31/00

(54) **Carpet for vehicles and method for manufacturing the same**
Teppich für ein Fahrzeug und seine Herstellungsmethode
Tapis pour véhicules et sa méthode de fabrication

(30) Priority: 27.12.2001 JP 2001396240
(43) Date of publication of application: 02.07.2003
(73) Proprietor: Suminoe Textile Co., Ltd., Osakashi, Osaka (JP)
(72) Inventor: Kazufumi, Shimizu, Narashi, Nara (JP); Shinsuke, Sugie, Kitakatsuragigun, Nara (JP)
(74) Representative: Viering, Jentschura & Partner

(56) References cited:
- WO-A-03/053675
- JP-A- 10 247 085
- JP-A- 2000 160 818
- US-A- 5 685 637

## Description

### BACKGROUND OF THE INVENTION

### 1. Field of the Invention

The present invention relates to a carpet for use in vehicles, such as a floor carpet for use in automobiles, which is capable of attaining quietness by effectively absorbing noise entering into an inside space of a vehicle from the upper side thereof, such as a roof, doors and windows, as well as noise entering into the inside space from the carpet-disposed floor side, and also relates to a method for manufacturing the carpet.

In this specification, the wording "air permeability" means a value measured in accordance with the method "A" according to 8.27.1 of JIS (Japanese Industrial Standard) L 1096-1999.

### 2. Description of Related Art

The following description sets forth the inventor's knowledge of related art and problems therein and should not be construed as an admission of knowledge in the prior art. Conventionally, a carpet is disposed on an automobile floor so as to obtain a good step feeling and prevent transmission of vibrations of the floor.

Now, an automobile floor transmits not only vibrations but also external noise into an inside space of an automobile. Although external noise passing through a floor can be somewhat reduced by such a floor carpet, the noise reduction by the floor carpet was not sufficient. Under the circumstances, a noise absorbable automobile floor carpet was expected. As such a noise absorbable automobile floor carpet, an automobile floor carpet composed of, for example, a carpet member having pile implanted on the upper surface thereof and a nonwoven fabric noise absorption layer adhered to the lower surface of the carpet member by heat press via an adhesive film is known. Document JP 200160818 shows such a carpet and is considered to be the closest prior art.

External noise entering into an inside space of an automobile includes not only noise entering via the floor but also noise entering via the roof, doors, windows, etc. Therefore, silence in an inside space of an automobile can be fully secured only if such a floor carpet can absorb both of the noises.

According to the aforementioned conventional automobile floor carpet, however, although external noise entering into an inside space of an automobile via a floor may be effectively absorbed by the lower noise absorption layer, external noise entering via a roof, doors, windows, etc. can be hardly absorbed by the floor carpet because the noise is bounced by the adhesive film layer, thereby returning to the inner space of the automobile.

### SUMMARY OF THE INVENTION

The present invention was conceived in view of the aforementioned technical background. It is an object of the present invention to provide a carpet for use in vehicles which is capable of attaining quietness by effectively absorbing the noise entering into an inside space of a vehicle from the upper side thereof, such as a roof, doors and windows, as well as the noise entering from the carpet-disposed floor side. It is another object of the present invention to provide a method for manufacturing the carpet.

In order to attain the aforementioned objects, the inventor has diligently conducted study, and found the fact that the aforementioned desired carpet can be obtained by employing an air permeable resin layer formed by melting and then solidifying thermoplastic resin powder as a resin layer securing an upper surface member and a nonwoven fabric sound absorption layer and further specifying the air permeability of the entire carpet in the thickness direction so as to fall within a specific range. Thus, the present invention has been completed.

According to the first aspect of the present invention, a carpet for use in vehicles is comprised of an upper surface layer, a sound absorption layer composed of a nonwoven fabric and an adhesive resin layer disposed between the upper surface layer and the sound absorption layer, the adhesive resin layer integrally securing the upper surface layer and the sound absorption layer, wherein the adhesive resin layer is an air permeable resin layer formed by melting and then solidifying thermoplastic resin powder, and wherein air permeability of the entire carpet in a thickness direction thereof falls within the range of 1 to 50 cm³/cm² · second.

In this carpet, since the nonwoven fabric sound absorption layer is disposed at a lower side of the carpet, the sound absorption layer can effectively absorb the noise from the carpet-disposed floor. Furthermore, since the adhesive resin layer is formed by melting the thermoplastic resin powder, the resin layer has air permeability. Therefore, noise entering into an inside space of a vehicle from the upper side thereof, e.g., the roof, doors, windows, etc., passes through the adhesive resin layer and then reaches the nonwoven fabric sound absorption layer to be absorbed. Thus, silence in the inside space of the vehicle can be attained. Furthermore, since the air permeability of the entire carpet in the thickness direction thereof is set not less than 1 cm³/cm² · second, the noise entering from the upper side of the carpet passes through the adhesive resin layer efficiently without being rebounded much by the adhesive resin layer, enhancing the noise absorption performance, which results in sufficient silence. Further, since the air permeability of the entire carpet in the thickness direction thereof is also set less than 50 cm³/cm² · second, even in cases where the noise from the carpet-disposed floor side is too loud to be absorbed by the sound absorption layer, the leakage of the noise into the inside space of the vehicle can be prevented effectively. Thus, in cases where the air permeability falls within the aforementioned specified range, silence can be assuredly secured under any conditions.

Although the aforementioned air permeability of the entire carpet in the thickness direction thereof is measured in a state where the upper surface layer, the adhesive resin layer and the nonwoven fabric sound absorption layer are integrally laminated, the value is greatly reflected by the air permeability of the adhesive resin layer. Therefore, it is generally considered that the air permeability of the entire carpet in the thickness direction thereof is nearly equivalent to that of the adhesive resin layer. Since it is technically difficult to measure the air permeability of the adhesive resin layer independently in the laminated state, this invention employs air permeability of the entire carpet in the thickness direction thereof.

Although the inventor tried to form an air permeable adhesive resin layer by melting a nonwoven fabric sheet or a net shaped sheet, it was difficult to obtain a resin layer having both outstanding sound absorption performance and high adhesive strength.

In the carpet for use in vehicles according to the present invention, it is preferable that the thickness of the sound absorption layer falls within the range of 0.3 to 15 mm, the weight per unit area of the layer falls within the range of 10 to 1,000 g/m², and the fineness of the fiber constituting the layer falls within the range of 0.1 to 30 decitex. In this case, sufficient sound absorption performance can be given at a broad frequency range covering from a lower frequency to a higher frequency.

It is preferable to use polyolefine family resin powder as the aforementioned thermoplastic resin powder. In this case, adhesive strength and recycling can be enhanced.

According to the second aspect of the present invention, a method for manufacturing a carpet for use in vehicles comprises scattering thermoplastic resin powder on an upwardly faced lower surface of an upper surface member, heating the thermoplastic resin powder into melted thermoplastic resin, placing a nonwoven fabric on the upwardly faced lower surface of the upper surface member via the melted thermoplastic resin, and pressing said nonwoven fabric and the upper surface member in a laminated state to thereby integrally secure the nonwoven fabric and the upper surface member via an air permeable resin layer.

If the thermoplastic resin powder is scattered onto the nonwoven fabric, some of the powder may enter the inside of the nonwoven fabric at the time of melting the powder. In the aforementnioned method, however, since the thermoplastic resin powder is scattered onto the upper surface member and then melted, the powder can be effectively prevented from entering into the upper surface member. Accordingly, the upper surface member and the nonwoven fabric can be secured appropriately. Furthermore, since the powder is heated in the state in which the nonwoven fabric is not disposed thereon, the powder can be melted efficiently, resulting in excellent productivity. Furthermore, the sequence of these processes may be performed continuously, which further enhances the productivity.

In the aforementioned manufacturing method, it is preferable that the particle size of the thermoplastic resin powder falls within the rage of 90 to 10,000 µm and that the scattering amount of the thermoplastic resin powder falls within the range of 5 to 500 g/m². By setting the particle size and the scattering amount as set forth, the carpet for use in vehicles according to the first aspect of the present invention can be manufactured assuredly. In other words, it is possible to assuredly manufacture a carpet for use in vehicles in which the air permeability of the entire carpet in a thickness direction thereof falls within the range of 1 to 50 cm³/cm² · second more.

Furthermore, in the aforementioned manufacturing method, it is preferable that the melt flow rate value of the thermoplastic resin powder is 2 to 520. In this case, it is possible to more assuredly manufacture a carpet for use in vehicles in which the air permeability of the entire carpet in a thickness direction thereof falls within the range of 1 to 50 cm³/cm² · second.

The above and/or other aspects, features and/or advantages of various embodiments will be further appreciated in view of the following description in conjunction with the accompanying figures. Various embodiments can include and/or exclude different aspects, features and/or advantages where applicable. In addition, various embodiments can combine one or more aspect or feature of other embodiments where applicable. The descriptions of aspects, features and/or advantages of particular embodiments should not be construed as limiting other embodiments or the claims

### BRIEF DESCRIPTION OF THE DRAWINGS

The accompanying figures are provided by way of example, without limiting the broad scope of the invention or various other embodiments, wherein:

Fig. 1 is a cross-sectional view showing a carpet for use in vehicles according to an embodiment of the present invention;

Fig. 2 is a cross-sectional view showing a carpet for use in vehicles according to another embodiment of the present invention; and

Fig. 3 is a schematic side view showing a method for manufacturing according to the present invention.

### DETAILED DESCRIPTION OF THE PREFERRED EMBODIMENTS

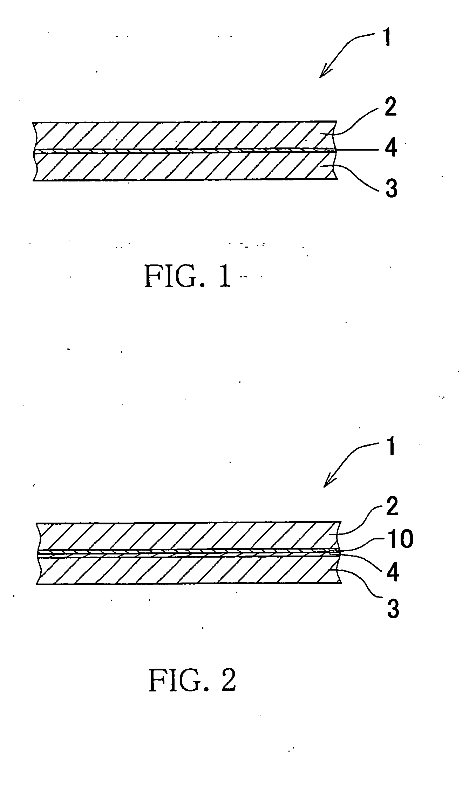

As shown in Fig. 1. the carpet 1 for use in vehicles according to the present invention includes an upper surface layer 2, a sound absorption layer 3 comprised of a nonwoven fabric, and an air permeable adhesive resin layer 4 formed by melting thermoplastic resin powder and integrally securing the upper surface layer 2 and the sound absorption layer 3. The air permeability of the entire carpet 1 in the thickness direction is set so as to fall within the range of 1 to 50 cm³/cm² · second.

In this carpet 1 for vehicles, since the adhesive resin layer 4 is formed by melting the scattered thermoplastic resin powder 24, it is possible to obtain an air permeable resin layer and set the air permeability of the entire carpet 1 in the thickness direction thereof within the above specified range.

In the present invention, the air permeability of the entire carpet 1 in the thickness direction should be set so as to fall within the range of 1 to 50 cm³/cm² · second because of the following reasons. If the air permeability is less than 1 cm³/cm² · second, some of the noise entered into an inside space of a vehicle from the upper side thereof via the roof, windows, doors and the like will be bounced and returned to the inside space of the vehicle without being absorbed by the adhesive resin layer 4. Therefore, sufficient silence in the inside space of the vehicle cannot be secured. On the other hand, if the air permeability exceeds 50 cm³/cm² · second, in cases where the noise entering from the carpet-disposed floor cannot be assuredly absorbed by the sound absorption layer, sufficient silence in the inside space of the vehicle cannot be secured because of the noise leaking into the inside space of the vehicle through the adhesive resin layer 4. Under the circumstances, in order to assuredly secure the silence under any conditions, the air permeability should be limited to the aforementioned specific range. Especially, it is preferable that the air permeability of the entire carpet in the thickness direction thereof falls within the range of 2 to 30 cm³/cm² · second.

The thermoplastic resin powder 24 is not limited to a specific one so long as it is thermoplastic. For example, polyethylene, ethylene-vinylacetate copolymer (EVA resin), polyolefine family resin such as polypropylene and vinyl chloride resin can be exemplified. Among these resin powders, it is preferable to use polyolefine family resin powder. This resin enhances adhesive strength and recycling. Among the polyolefine family resin powder, the most preferable one is polyethylene powder having a cost-effective advantage in addition to the aforementioned advantages.

The aforementioned upper surface layer 2 may have pile or may not have pile, and is not limited to a specific one. As the former example, a carpet including a carpet base member and pile implanted on the surface thereof, a tufted carpet, a woven carpet, a knitted carpet and an electrodeposition carpet can be exemplified. As the latter example, a needle punched nonwoven fabric can be exemplified.

The aforementioned carpet base member is not limited to a specific one and may be anything. As the carpet base member, a fabric formed by weaving or knitting strings made of synthetic fibers such as polyester fibers, nylon fibers, polypropylene fibers or acrylic fibers or made of natural fibers such as hemp, cotton or wool, and a nonwoven fabric formed by mechanically connecting or needling various fibers or strings or chemically connecting them with adhesives can be exemplified.

As the aforementioned pile material, it is not specifically limited to a specific one. For example, polyester fibers, nylon fibers, polypropylene fibers, acrylic fibers or rayon fibers can be preferably used. Furthermore, natural fibers such as hemp, cotton, wool can also be used. Furthermore, the method for making the pile layer is not limited to a specific one. The pile layer may be made by, for example, weaving, e.g., warp pile weaving or woof pile weaving, by transplanting pile strings by a tufting machine, by using a knitting-machine, or by adhering pile strings using adhesives. The pile is not required to have a specific configuration, and may be in the form of cut-pile or loop-pile.

The aforementioned nonwoven fabric constituting the sound absorption layer 3 is not limited to a specific one, and may be any nonwoven fabric. For example, a needle punched nonwoven fabric, a water needled nonwoven fabric, a spanbonded nonwoven fabric or a felt such as a wool felt may be used. The kind of fiber constituting the nonwoven fabric sound absorption layer 3 is not limited to a specific one. For example, polyester fibers, nylon fibers, polypropylene fibers, acrylic fibers or natural fibers can be exemplified.

It is preferable that the thickness of the sound absorption layer 3 falls within the range of 0.3 to 15 mm because of the following reasons. If the thickness is less than 0.3 mm, sound absorption effect cannot be obtained sufficiently. To the contrary, if the thickness exceeds 15 mm, the height of the inside space of the vehicle is reduced, which deteriorates the user's feeling of available room.

It is preferable that the weight per unit area of the sound absorption layer 3 falls within the range of 10 to 1,000 g/m² because of the following reasons. If it is less than 10 g /m², it is difficult to obtain sufficient sound absorption performance. To the contrary, if it exceeds 1,000 g/m², it is difficult to secure the lightweight performance as a carpet 1 for use in vehicles.

The fineness of the fiber constituting the sound absorption layer 3 preferably falls within the range of 0.1 to 30 decitex because of the following reasons. If it is less than 0.1 decitex, low frequency noise is not effectively absorbed and the cushion property deteriorates. To the contrary, if it exceeds 30 decitex, high frequency noise is not effectively absorbed. It is more preferable that the fineness of the fiber constituting the sound absorption layer 3 falls within the range of 0.1 to 15 decitex.

In the aforementioned embodiment, no layer is laminated on the lower surface of the sound absorption layer 3. However, the present invention is not limited to this structure. For example, a slip prevention resin layer (for example, a rubber family latex (SBR, etc.) coated layer) may be laminated on the lower surface of the sound absorption layer 3. A plurality of layers may also be laminated on the lower surface of the sound absorption layer as needed. In either case, however, the air permeability of the entire carpet 1 in the thickness direction should fall within the range of 1 to 50 cm³/cm². second.

Furthermore, as shown in Fig. 2, an additional latex layer 10 may be provided on the lower surface of the upper surface layer 2 to prevent the pile from being pulled out. In other words, an additional latex layer 10 may be disposed between the upper surface layer 2 and the adhesive resin layer 4. In this case, it is also required to design such that the air permeability of the entire carpet 1 in the thickness direction falls within the range of 1 to 50 cm³/cm² · second.

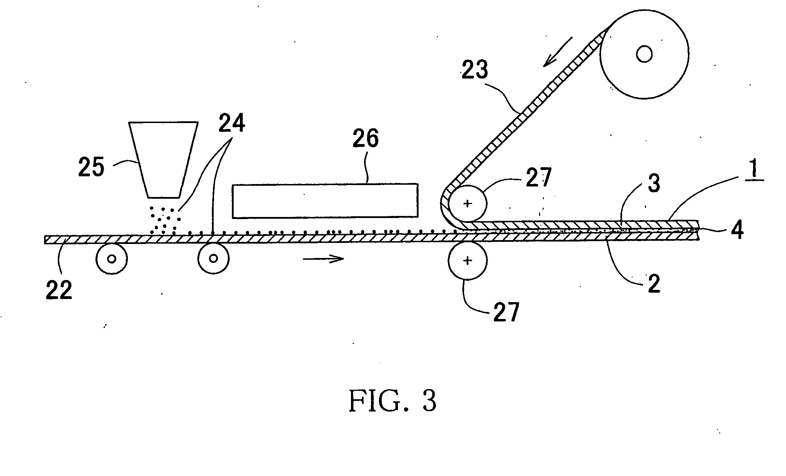

An embodiment of a carpet 1 for use in vehicles according to the present invention can be, for example, manufactured as follows. As shown in Fig. 3, first, the lower surface of the upper surface member 22 is faced upward. Namely, in cases where the upper surface member 22 is provided with pile, the pile side of the upper surface member 22 is faced downward. Then, while keeping this state, the upper surface member 22 is transferred rightward as shown in Fig. 3 at a constant rate.

Next, thermoplastic resin powder 24 is scattered onto the upper surface member 22 from a powder scattering device 25 disposed above the upper surface member 22. In this powder scattering device 25, a roller (not shown) having a number of dimples (dented portions) similar to dimples formed on a golf ball surface is disposed at a powder scattering opening formed at the bottom portion of the device 25. In accordance with the rotation of the roller, powder in the dimples is scattered downward. According to this powder scattering device 25, a desired amount of thermoplastic powder stored in the device can be scattered.

Subsequently, the thermoplastic resin powder 24 scattered on the upper surface member 22 is heated and melted by using a heating apparatus 26. Thereafter, a nonwoven fabric 23 is disposed thereon and pressed by pressure rolls 27 and 27. Thus, a carpet 1 in which the upper surface member 2 and the nonwoven fabric layer 3 are integrally secured via an air permeable resin layer 4 is continuously manufactured.

As the pressure rollers 27, cooling pressure rolls can be preferably used. By pressing the layers with the cooling pressure rollers, the melted powder can be cooled immediately after the lamination of the layers. Therefore, the solidification of the melted powder can be enhanced, which in turn can enhance the working speed (productivity) and effectively prevent the shrinkage of the nonwoven fabric 23 made of thermoplastic fiber and the collapse of pile constituting the upper surface layer 22.

In the aforementioned manufacturing method, it is preferable to use thermoplastic resin powder 24 having a particle size of 90 to 10,000 µm and regulate the amount of the powder 24 to be scattered so as to fall within the range of 5 to 500 g/m² because of the following reasons. If the particle size is less than 90 µm, the work environment at the time of manufacturing the carpet deteriorates since the powder easily goes up into the air and the adhesive strength becomes insufficient since some powder goes into the upper surface layer 2. To the contrary, if the particle size exceeds 10,000 µm, the thermoplastic resin powder 24 becomes difficult to be melted, causing insufficient adhesive strength and it also becomes difficult to secure the desired air permeability of 1 to 50 cm³/cm² · second. Furthermore, if the amount of powder to be scattered is less than 5 g/m², sufficient adhesive strength cannot be obtained. To the contrary, if the amount of powder to be scattered exceeds 500 g/m², it becomes difficult to obtain sufficient air permeability, and therefore it becomes difficult to secure the desired air permeability of 1 to 50 cm³/cm² · second. Especially, it is more preferable to use thermoplastic resin powder 24 having a particle size of 90 to 5,000µm and regulate the amount of powder 24 to be scattered so as to fall within the range of 100 to 400 g/m².

As the thermoplastic resin powder 24, it is preferable to use thermoplastic resin powder whose melt flow rate value falls within the range of 2 to 520 because of the following reasons. If it exceeds 520, the resin excessively permeates, resulting in insufficient adhesive strength. To the contrary, if it is less than 2, it becomes difficult to obtain sufficient air permeability, and therefore it becomes difficult to secure the desired air permeability of 1 to 50 cm³/cm² · second. The aforementioned melt flow rate value is measured in accordance with JIS (Japanese Industrial Standard) K6924-2 1997.

As for the heating temperature by the heating apparatus 26, it is preferable to control the heating apparatus so that the temperature of the thermoplastic resin at the time of securing the layers is higher than the melting point of the thermoplastic resin powder 24 by 10 to 70 °C because of the following reasons. If the heating temperature is lower than the lower limit of the aforementioned preferable range, sufficient adhesive strength cannot be obtained, resulting in deteriorated durability. To the contrary, if the heating temperature exceeds the upper limit of the aforementioned preferable range, the upper surface layer 2 and/or the sound absorption layer.3 may cause heat deterioration.

A carpet for use in vehicles according to the present invention 1 is not limited to a carpet manufactured by the aforementioned method.

Furthermore, the carpet 1 for use in vehicles according to the present invention is preferably used as an automobile floor carpet (including a floor carpet shaped in accordance with the floor configuration and a carpet to be disposed thereon) since the carpet 1 has the aforementioned outstanding sound absorption property. However, the carpet 1 according to the present invention is not limited to an automobile floor carpet, but may be used as, for example, a carpet for use in various vehicles, such as railroad vehicles, ships/vessels and aircrafts.

Next, concrete embodiments according to the present invention will be explained.

### <Materials>

Upper surface member A: Nonwoven fabric (carpet base member) made of polyester fibers (weight of unit area: 120 g/m²) with tufted pile made of nylon fibers (pile weight of unit area: 500 g/m²)

Upper surface member B: Needle-punched nonwoven fabric (weight per unit area: 400 g/m²)

Nonwoven fabric A: Needle-punched nonwoven fabric (thickness: 4 mm, weight per unit area: 500 g/m²) made of polyethylene terephthalate fibers (3.3 decitex /4.4 decitex=60 wt%/40 wt%)

Nonwoven fabric B: Span bonded nonwoven fabric (thickness: 0.5 mm, weight per unit area: 50 g/m²) made of fibers in which the same amount of polyethylene fiber of 1.6 decitex and fiber-division type polyethylene terephthalate fiber of 0.2 decitex are mixed.

Nonwoven fabric C: Needle-punched nonwoven fabric (thickness: 2.5 mm, weight per unit area: 300 g/m²) made of polyethylene terephthalate fibers (6.6 decitex /4.4 decitex=70 wt%/30 wt%)

Nonwoven fabric D: Needle-punched nonwoven fabric (thickness: 6 mm, weight per unit area: 800 g/m²) made of polyethylene terephthalate fibers (3.3 decitex /4.4 decitex=60 wt%/40 wt%)

Thermoplastic resin powder A: Polyethylene powder (mean diameters: 355 µm, melt flow rate value: 200, melting point: 107 °C)

Thermoplastic resin powder B: EVA powder (mean diameters: 4,000 µm, melt flow rate value: 420, melting point: 64 °C)

Thermoplastic resin powder C: EVA powder (mean diameters: 150 µm, melt flow rate value: 420, melting point: 64 °C) <Example 1>

As shown in Fig. 3, while transferring the upper surface member A (22) at a constant rate with the pile side faced downward, the aforementioned thermoplastic resin powder A (24) was scattered on the upper surface member A (22) at the scattering rate of 300 g/m² from the scattering device 25. Subsequently, the powder A (24) was heated to 150 °C by the heating apparatus 26 and melted. Thereafter, the aforementioned nonwoven fabric A was disposed thereon and pressed by the water-cooling-type cooling pressure rollers 27 and 27. Thus, a carpet 1 for use in vehicles was obtained. The air permeability of this carpet 1 in the thickness direction was 18 cm³/cm² · second.

As shown in Fig. 3, while transferring the upper surface member B (22) at a constant rate with the pile side faced downward, the aforementioned thermoplastic resin powder B (24) was scattered on the upper surface member B (22) at the scattering rate of 400 g/m² from the scattering device 25. Subsequently, the powder B (24) was heated to 130 °C by the heating apparatus 26 and melted. Thereafter, the aforementioned nonwoven fabric A was disposed thereon and pressed by the water-cooling-type cooling pressure rollers 27 and 27. Thus, a carpet 1 for use in vehicles was obtained. The air permeability of this carpet 1 in the thickness direction was 20 cm³/cm² · second.

### <Example 3>

As shown in Fig. 3, while transferring the upper surface member B (22) at a constant rate with the pile side faced downward, the aforementioned thermoplastic resin powder C (24) was scattered on the upper surface member B (22) at the scattering rate of 50 g/m² from the powder scattering device 25. Subsequently, the powder C (24) was heated to 120 °C by the heating apparatus 26 and melted. Thereafter, the aforementioned nonwoven fabric A was disposed thereon and pressed by the water-cooling-type cooling pressure rollers 27 and 27. Thus, a carpet 1 for use in vehicles was obtained The air permeability of this carpet 1 in the thickness direction was 30 cm³/cm² · second.

### <Example 4>

As shown in Fig. 3, while transferring the upper surface member A (22) at a constant rate with the pile side faced downward, the aforementioned thermoplastic resin powder A (24) was scattered on the upper surface member A (22) at the scattering rate of 250 g/m² from the scattering device 25. Subsequently, the powder A (24) was heated to 150 °C by the heating apparatus 26 and melted. Thereafter, the aforementioned nonwoven fabric C was disposed thereon and pressed by the water-cooling-type cooling pressure rollers 27 and 27. Thus, a carpet 1 for use in vehicles was obtained. The air permeability of this carpet 1 in the thickness direction was 38 cm³/cm² · second.

### <Example 5>

As shown in Fig. 3, while transferring the upper surface member A (22) at a constant rate with the pile side faced downward, the aforementioned thermoplastic resin powder A (24) was scattered on the upper surface member A (22) at the scattering rate of 300 g/m² from the scattering device 25. Subsequently, the powder A (24) was heated to 150 °C by the heating apparatus 26 and melted. Thereafter, the aforementioned nonwoven fabric D was disposed thereon and pressed by the water-cooling-type cooling pressure rollers 27 and 27. Thus, a carpet 1 for use in vehicles was obtained. The air permeability of this carpet 1 in the thickness direction was 8 cm³/cm² · second.

**Table 1**

| | Upper surface member | Powder | Scattering amount of powder (g/m²) | Nonwoven fabric | Air permeability of the carpet (cm³/cm² · second) |
|---|---|---|---|---|---|
| Example 1 | Member A | Powder A | 300 | Nonwoven fabric A | 18 |
| Example 2 | Member B | Powder B | 400 | Nonwoven fabric A | 20 |
| Example 3 | Member B | Powder C | 50 | Nonwoven fabric B | 30 |
| Example 4 | Member A | Powder A | 250 | Nonwoven fabric C | 38 |
| Example 5 | Member A | Powder A | 300 | Nonwoven fabric D | 8 |

### <Comparative Example 1>

The aforementioned upper surface member A was disposed with the pile side faced upwardly. A polyethylene hot-melt film of 400 g/m² and the nonwoven fabric A were disposed on the upper surface member in this order and then simultaneously laminated to thereby obtain a carpet for use in vehicles. The air permeability of this carpet in the thickness direction was 0 cm³/cm² · second. <Comparative Example 2>

A carpet for use in vehicles was obtained in the same manner as the comparative example 1 except that a polyethylene hot-melt film of 150 g/m² was used in place of the polyethylene hot-melt film of 400 g/m². The air permeability of this carpet in the thickness direction was 0.5 cm³/cm² · second.

### <Comparative Example 3>

A carpet for use in vehicles was obtained in the same manner as the Comparative Example 1 except that a network-like (net-shaped) sheet made of polyester (30 g/m²) was used in place of the polyethylene hot-melt film. The air permeability of this carpet in the thickness direction was 45 cm³/cm² · second.

In each of the carpets obtained as mentioned above, the sound absorption characteristics and the adhesive strength were investigated based on the following evaluation methods. The results are shown in Table 2.

### <Sound absorption property evaluation method>

Sound absorption rate was measured based on the perpendicular incidence sound absorption measuring method of ASTEM E1050.

### <Silence evaluation method>

Based on the evaluation of the aforementioned sound absorption property, "⊚" denotes extremely excellent sound absorption property at 1000 Hz and 2000 Hz, "○" denotes excellent sound absorption property at both frequencies, and "×" denotes inadequate sound absorption property at at least one of the frequencies.

### <Adhesive strength evaluation method>

In this evaluation, "○" denotes that the adhesive strength was 50 N or more, "Δ" denotes that the adhesive strength was not less than 20 N but less than 50N, and "×" denotes that the adhesive strength was less than 20 N.

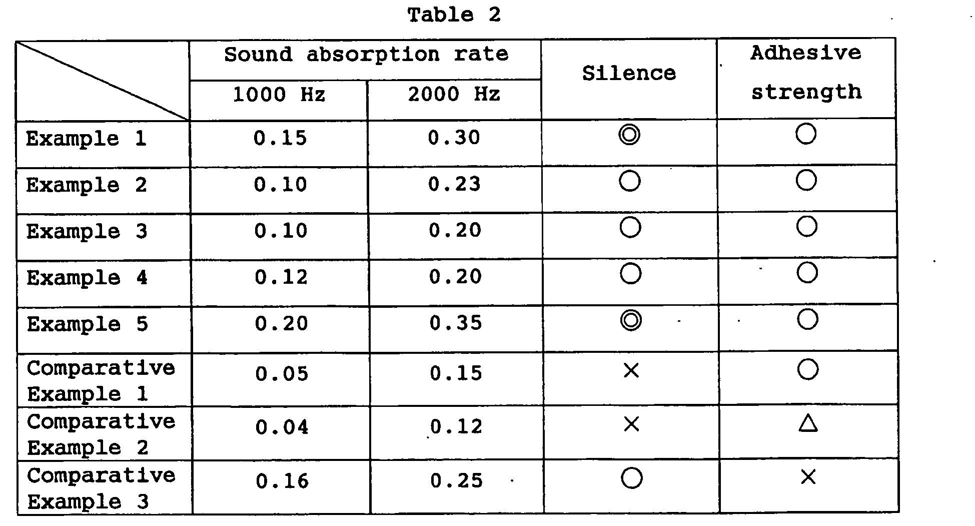

As will be apparent from Table 2, in the carpets according to Examples 1 to 5 of the present invention, the upper surface member and the nonwoven fabric sound absorption layer were secured with sufficient adhesive strength, and the carpets were excellent in sound absorption properties and capable of obtaining sufficient silence.

To the contrary, in Comparative Example 1, it was not possible to secure silence. In Comparative Example 2, the adhesive strength was inadequate, and it was not possible to secure sufficient silence because of its insufficient air permeability. In Comparative Example 3, although the air permeability falling within the range of 1 to 50 cm³/cm² · second was obtained and therefore sufficient silence can be secured, the adhesive strength was not enough and the adhesion durability was poor.

As explained above, the carpet for use in vehicles according to the present invention (the first aspect of the invention) is comprised of an upper surface layer, a sound absorption layer composed of a nonwoven fabric and an adhesive resin layer disposed between the upper surface layer, and the sound absorption layer, the adhesive resin layer integrally securing the upper surface layer and the sound absorption layer, wherein the adhesive resin layer is an air permeable resin layer formed by melting and then solidifying thermoplastic resin powder, and wherein air permeability of entire carpet in a thickness direction thereof falls within the range of 1 to 50 cm³/cm² · second. Therefore, the noise entering from the upper side of the carpet passes through the adhesive resin layer efficiently without being rebounded much by the adhesive resin layer, which enhances the noise absorption performance. This results in sufficient silence. Furthermore, even in cases where the noise from the carpet-disposed floor side is too loud to be absorbed by the sound absorption layer, the leakage of the noise into the inside space of the vehicle can be prevented effectively. Thus, silence can be assuredly secured under any conditions.

In cases where the thickness of the sound absorption layer falls within the range of 0.3 to 15 mm, the weight-per unit area of the layer falls within the range of 10 to 1,000 g/m² and the fineness of the fiber constituting the layer falls within the range of 0.1 to 30 decitex, sufficient sound absorption performance can be given at a broad frequency range covering from a lower frequency to a higher frequency.

In cases where polyolefine family resin powder is used as the thermoplastic resin powder, adhesive strength and recycling can be enhanced.

According to the second aspect of the present invention (manufacturing method), it is possible to effectively manufacture the carpet for use in vehicles according to the first aspect of the present invention in which the adhesive strength is further enhanced.

In the aforementioned manufacturing method, in cases where the particle size of the thermoplastic resin powder falls within the rage of 90 to 10,000 µm and that the scattering amount of the thermoplastic resin powder falls within the range of 5 to 500 g/m², the carpet for use in vehicles according to the first aspect of the present invention can be manufactured assuredly.

In cases where the melt flow rate value of the thermoplastic resin powder is 2 to 520, the carpet for use in vehicles according to the first aspect of the present invention can be manufactured assuredly.

This application claims priority to Japanese Patent Application No. 2001-396240 filed on December 27, 2001, the disclosure of which is incorporated by reference in its entirety.

While illustrative embodiments of the present invention have been described herein, the present invention is not limited to the various preferred embodiments described herein, but includes any and all embodiments having modifications, omissions, combinations (e.g., of aspects across various embodiments), adaptations and/or alterations as would be appreciated by those in the art based on the present disclosure. The limitations in the claims are to be interpreted broadly based the language employed in the claims and not limited to examples described in the present specification or during the prosecution of the application, which examples are to be construed as non-exclusive. For example, in the present disclosure, the term "preferably" is non-exclusive and means "preferably, but not limited to." Means-plus-function or step-plus-function limitations will only be employed where for a specific claim limitation all of the following conditions are present in that limitation: a) "means for" or "step for" is expressly recited; b) a corresponding function is expressly recited; and c) structure, material or acts that support that structure are not recited.

This application claims priority to Japanese Patent Application No. 2001-396240 filed on December 27, 2001, the disclosure of which is incorporated by reference in its entirety.

The terms and descriptions in this specification are used only for explanatory purposes and the present invention is not limited to these terms and descriptions. It should be appreciated that there are many modifications and substitutions without departing from the scope of the present invention which is defined by the appended claims. The present invention permits any design-change if it is within the limits by which the claim was performed.

## Claims

1. A carpet (1) for use in vehicles, comprising:
an upper surface layer (2);
a sound absorption layer (3) comprised of a nonwoven fabric; and
an adhesive resin layer (4) disposed between said upper surface layer (2) and said sound absorption layer (3), said adhesive resin layer (4) integrally securing said upper surface layer (2) and said sound absorption layer (3),
**characterized in that** said adhesive resin layer (4) is an air permeable resin layer formed by melting and then solidifying thermoplastic resin powder (24), and
wherein air permeability of entire carpet (1) in a thickness direction thereof falls within the range of 1 to 50 cm³/cm² · second.

2. The carpet (1) for use in vehicles as recited in claim 1, wherein said air permeability of entire carpet (1) in a thickness direction thereof falls within the range of 2 to 30 cm³/cm² · second.

3. The carpet (1) for use in vehicles as recited in claim 1, wherein a thickness of said sound absorption layer (3) falls within the range of 0.3 to 15 mm.

4. The carpet (1) for use in vehicles as recited in claim 1, wherein weight per unit area of said sound absorption layer (3) falls within the range of 10 to 1,000 g/m².

5. The carpet (1) for use in vehicles as recited in claim 1, wherein fineness of a fiber constituting said sound absorption layer (3) falls within the range of 0.1 to 30 decitex.

6. The carpet (1) for use in vehicles as recited in claim 1, wherein fineness of a fiber constituting said sound absorption layer (3) falls within the range of 0.1 to 15 decitex.

7. The carpet (1) for use in vehicles as recited in claim 1, wherein said thickness of said sound absorption layer (3) falls within the range of 0.3 to 15 mm, wherein said weight per unit area of said sound absorption layers (3) falls within the range of 10 to 1,000 g/m², and wherein said fineness of a fiber constituting said sound absorption layers (3) falls within the range of 0.1 to 30 decitex.

8. The carpet (1) for use in vehicles as recited in claim 1, wherein said thermoplastic resin powder (24) is polyolefine family resin powder.

9. The carpet (1) for use in vehicles as recited in claim 1, wherein said carpet (1) is a floor carpet for automobiles.

10. A method for manufacturing a carpet for vehicles, the method comprising:
scattering thermoplastic resin powder (24) on an upwardly faced lower surface of an upper surface member (22);
heating said thermoplastic resin powder (24) into melted thermoplastic resin; and
placing a nonwoven fabric (23) on said upwardly faced lower surface of said upper surface member (22) via said melted thermoplastic resin (24); and
pressing said nonwoven fabric (23) and said upper surface member (22) in a laminated state to thereby integrally secure said nonwoven fabric (23) to said upper surface member (22) via an air permeable resin layer (4).

11. The method for manufacturing a carpet (1) for vehicles as recited in claim 10, wherein particle size of said thermoplastic resin powder (24) is 90 to 10,000 µm, and wherein a scattering amount of said thermoplastic resin powder (24) is 5 to 500 g/m².

12. The method for manufacturing a carpet (1) for vehicles as recited in claim 10, wherein particle size of said thermoplastic resin powder (24) is 90 to 5,000 µm, and wherein a scattering amount of said thermoplastic resin powder (24) is 100 to 400 g/m².

13. The method for manufacturing a carpet (1) for vehicles as recited in claim 10, wherein a melt flow rate value of said thermoplastic resin powder (24) is 2 to 520.

14. The method for manufacturing a carpet (1) for vehicles as recited in claim 10, wherein said pressing is performed by using cooling pressure rollers (27).

15. The method for manufacturing a carpet (1) for vehicles as recited in claim 14, wherein said cooling pressure rollers (27) are water cooling type pressure rollers (27).

## Patentansprüche

1. Ein Teppich (1) zur Verwendung in Fahrzeugen, aufweisend:
eine obere Oberflächenschicht (2),
eine Geräuschabsorptionsschicht (3) aus einem Textilverbundstoff, und
eine Klebeharzschicht (4), die zwischen der oberen Oberflächenschicht (2) und der Geräuschabsorptionsschicht (3) angeordnet ist, wobei die Klebeharzschicht (4) die obere Oberflächenschicht (2) und die Geräuschabsorptionsschicht (3) einstückig sichert,
**dadurch gekennzeichnet, dass** die Klebeharzschicht (4) eine luftdurchlässige Harzschicht ist, die durch Schmelzen und anschließendes Verfestigen eines thermoplastischen Harzpulvers (24) gebildet wird, und
wobei die Luftdurchlässigkeit des gesamten Teppichs (1) in Richtung der Dicke desselben im Bereich von 1 bis 50 cm³/cm² • Sekunde liegt.

2. Der Teppich (1) zur Verwendung in Fahrzeugen gemäß Anspruch 1, wobei die Luftdurchlässigkeit des gesamten Teppichs (1) in Richtung der Dicke desselben im Bereich von 2 bis 30 cm³/cm² • Sekunde liegt.

3. Der Teppich (1) zur Verwendung in Fahrzeugen gemäß Anspruch 1, wobei eine Dicke der Geräuschabsorptionsschicht (3) im Bereich von 0,3 mm bis 15 mm liegt.

4. Der Teppich (1) zur Verwendung in Fahrzeugen gemäß Anspruch 1, wobei das Gewicht je Flächeneinheit der Geräuschabsorptionsschicht (3) im Bereich von 10 bis 1000 g/m² liegt.

5. Der Teppich (1) zur Verwendung in Fahrzeugen gemäß Anspruch 1, wobei die Feinheit einer Faser, die die Geräuschabsorptionsschicht (3) bildet, im Bereich von 0,1 bis 30 Decitex liegt.

6. Der Teppich (1) zur Verwendung in Fahrzeugen gemäß Anspruch 1, wobei die Feinheit einer Faser, die die Geräuschabsorptionsschicht (3) bildet, im Bereich von 0,1 bis 30 Decitex liegt.

7. Der Teppich (1) zur Verwendung in Fahrzeugen gemäß Anspruch 1, wobei die Dicke der Geräuschabsorptionsschicht (3) im Bereich von 0,3 mm bis 15 mm liegt, wobei das Gewicht je Flächeneinheit der Geräuschabsorptionsschicht (3) im Bereich von 10 bis 1000 g/m² liegt, und wobei die Feinheit einer Faser, die die Geräuschabsorptionsschicht (3) bildet, im Bereich von 0,1 bis 30 Decitex liegt.

8. Der Teppich (1) zur Verwendung in Fahrzeugen gemäß Anspruch 1, wobei das thermoplastische Harzpulver (24) ein Harzpulver der Familie der Polyolefine ist.

9. Der Teppich (1) zur Verwendung in Fahrzeugen gemäß Anspruch 1, wobei der Teppich (1) ein Fußbodenteppich für Fahrzeuge ist.

10. Ein Verfahren zum Herstellen eines Teppichs für Fahrzeuge, wobei das Verfahren aufweist:
Ausstreuen von thermoplastischem Harzpulver (24) auf eine nach oben gewandte untere Fläche eines oberen Oberflächenelements (22),
Erhitzen des thermoplastischen Harzpulvers (24) zu einem geschmolzenen thermoplastischen Harz, und
Platzieren eines Textilverbundstoffes (23) auf der nach oben gewandten unteren Fläche des oberen Flächenelements (22) über das geschmolzene thermoplastische Harz (24), und
Pressen des Textilverbundstoffes (23) und des oberen Oberflächenelements (22) in einen Laminierzustand, so dass **dadurch** der Textilverbundstoff (23) über eine luftdurchlässige Harzschicht (4) einstückig an dem oberen Oberflächenelement (22) gesichert wird.

11. Das Verfahren zum Herstellen eines Teppichs (1) für Fahrzeuge gemäß Anspruch 10, wobei die Teilchengröße des thermoplastischen Harzpulvers (24) 90 bis 10000 µm beträgt, und wobei eine Streumenge des thermoplastischen Harzpulvers (24) 5 bis 500 g/m² beträgt.

12. Das Verfahren zum Herstellen eines Teppichs (1) für Fahrzeuge gemäß Anspruch 10, wobei die Teilchengröße des thermoplastischen Harzpulvers (24) von 90 bis 5000 µm beträgt, und wobei eine Streumenge des thermoplastischen Harzpulvers (24) 100 bis 400 g/m² beträgt.

13. Das Verfahren zum Herstellen eines Teppichs (1) für Fahrzeuge gemäß Anspruch 10, wobei ein Schmelzflussratenwert des thermoplastischen Harzpulvers (24) 2 bis 520 beträgt.

14. Das Verfahren zum Herstellen eines Teppichs (1) für Fahrzeuge gemäß Anspruch 10, wobei das Pressen mittels Kühldruckwalzen (27) durchgeführt wird.

15. Das Verfahren zum Herstellen eines Teppichs (1) für Fahrzeuge gemäß Anspruch 14, wobei die Kühldruckwalzen (27) Druckwalzen des Wasserkühlungstyps sind.

## Revendications

1. Tapis (1) destiné à être utilisé dans des véhicules, comprenant :
une couche de surface supérieure (2) ;
une couche d'absorption de son (3) composée d'un tissu non-tissé ; et
une couche de résine adhésive (4) disposée entre ladite couche de surface supérieure (2) et ladite couche d'absorption de son (3), ladite couche de résine adhésive (4) fixant de manière intégrale ladite couche de surface supérieure (2) et ladite couche d'absorption de son (3),
**caractérisé en ce que** ladite couche de résine adhésive (4) est une couche de résine perméable à l'air formée en faisant fondre puis en solidifiant de la poudre de résine thermoplastique (24), et
dans lequel la perméabilité à l'air de l'ensemble du tapis (1) dans une direction d'épaisseur de celui-ci est dans la plage de 1 à 50 cm³/cm².seconde.

2. Tapis (1) destiné à être utilisé dans des véhicules selon la revendication 1, dans lequel ladite perméabilité à l'air de l'ensemble du tapis (1) dans une direction d'épaisseur de celui-ci est dans la plage de 2 à 30 cm³/cm².seconde.

3. Tapis (1) destiné à être utilisé dans des véhicules selon la revendication 1, dans lequel une épaisseur de ladite couche d'absorption de son (3) est dans la plage de 0,3 à 15 mm.

4. Tapis (1) destiné à être utilisé dans des véhicules selon la revendication 1, dans lequel le poids par unité de surface de ladite couche d'absorption de son (3) est dans la plage de 10 à 1 000 g/m².

5. Tapis (1) destiné à être utilisé dans des véhicules selon la revendication 1, dans lequel la finesse d'une fibre constituant ladite couche d'absorption de son (3) est dans la plage de 0,1 à 30 décitex.

6. Tapis (1) destiné à être utilisé dans des véhicules selon la revendication 1, dans lequel la finesse d'une fibre constituant ladite couche d'absorption de son (3) est dans la plage de 0,1 à 15 décitex.

7. Tapis (1) destiné à être utilisé dans des véhicules selon la revendication 1, dans lequel ladite épaisseur de ladite couche d'absorption de son (3) est dans la plage de 0,3 à 15 mm, dans lequel ledit poids par unité de surface de ladite couche d'absorption de son (3) est dans la plage de 10 à 1 000 g/m², et dans lequel ladite finesse d'une fibre constituant ladite couche d'absorption de son (3) est dans la plage de 0,1 à 30 décitex.

8. Tapis (1) destiné à être utilisé dans des véhicules selon la revendication 1, dans lequel ladite poudre de résine thermoplastique (24) est une poudre de résine de la famille des polyoléfines.

9. Tapis (1) destiné à être utilisé dans des véhicules selon la revendication 1, dans lequel ledit tapis (1) est un tapis de plancher pour automobiles.

10. Méthode de fabrication d'un tapis pour véhicules, la méthode comprenant les étapes consistant à :
disperser de la poudre de résine thermoplastique (24) sur une surface inférieure faisant face vers le haut d'un membre de surface supérieure (22) ;
chauffer ladite poudre de résine thermoplastique (24) en une poudre thermoplastique fondue ; et
placer un tissu non-tissé (23) sur ladite surface inférieure faisant face vers le haut dudit membre de surface supérieure (22) par le biais de ladite résine thermoplastique fondue (24), et
presser ledit tissu non-tissé (23) et ledit membre de surface supérieure (22) dans un état stratifié pour de ce fait fixer de manière intégrale ledit tissu non-tissé (23) sur ledit membre de surface supérieure (22) par le biais d'une couche de résine perméable à l'air (4).

11. Méthode de fabrication d'un tapis (1) pour des véhicules selon la revendication 10, dans laquelle la taille de particules de ladite poudre de résine thermoplastique (24) est de 90 à 10 000 µm, et dans laquelle une quantité de dispersion de ladite poudre de résine thermoplastique (24) est de 5 à 500 g/m².

12. Méthode de fabrication d'un tapis (1) pour des véhicules selon la revendication 10, dans laquelle la taille de particules de ladite poudre de résine thermoplastique (24) est de 90 à 5 000 µm, et dans laquelle une quantité de dispersion de ladite poudre de résine thermoplastique (24) est de 100 à 400 g/m².

13. Méthode de fabrication d'un tapis (1) pour des véhicules selon la revendication 10, dans laquelle une valeur de débit de fusion de ladite poudre de résine thermoplastique (24) est de 2 à 520.

14. Méthode de fabrication d'un tapis (1) pour des véhicules selon la revendication 10, dans laquelle ladite pression est effectuée en utilisant des rouleaux de pression de refroidissement (27).

15. Méthode de fabrication d'un tapis (1) pour des véhicules selon la revendication 14, dans laquelle lesdits rouleaux de pression de refroidissement (27) sont des rouleaux de pression de type à refroidissement à l'eau (27).
